# FASCICULE DE BREVET EUROPEEN

(11) **EP 2 342 382 B1**
(45) Date de publication et mention de la délivrance du brevet: **14.11.2012**
(21) Numéro de dépôt: 09817298.4
(22) Date de dépôt: 30.09.2009
(51) Int. Cl.: E02B 15/04

(54) **DISPOSITIF DE RAMASSAGE D'OBJETS FLOTTANTS SUR L'EAU TELS QUE DES HYDROCARBURES**
VORRICHTUNG ZUR AUFNAHME VON AUF DEM WASSER SCHWIMMENDEN OBJEKTEN, WIE ZUM BEISPIEL KOHLENWASSERSTOFFEN
DEVICE FOR PICKING UP OBJECTS FLOATING ON THE WATER, SUCH AS HYDROCARBONS

(30) Priorité: 01.10.2008 FR 0856651
(43) Date de publication de la demande: 13.07.2011
(73) Titulaire: Ecoceane SAS, 75004 Paris (FR)
(72) Inventeur: Gastaldi, Robert, Suresnes (FR)
(74) Mandataire: Maillet, Alain
(86) Numéro de dépôt international: PCT/EP2009/062709
(87) Numéro de publication internationale: WO 2010/037791

(56) Documents cités:
- US-A- 3 662 891
- US-A- 4 372 854
- US-A- 4 428 319
- US-A- 5 711 634

## Description

La présente invention concerne un dispositif de ramassage d'objets flottants sur l'eau tels que des hydrocarbures.

On connaît des dispositifs de ramassage d'objets flottants sur l'eau qui comprennent des filets dont les mailles sont telles que l'eau peut les traverser mais que les objets flottants ne le peuvent pas et restent ainsi dans le filet. Ce type de filet ne permet pas d'obtenir des résultats très satisfaisants, car il arrive souvent que les objets et, en particulier les hydrocarbures, parviennent à traverser les mailles. Un dispositif de ramassage avec les caractéristiques décrites dans le préambule de la revendication 1 est connu de US-A- 4 428 319.

Un objet de la présente invention est de proposer un dispositif de ramassage d'objets flottants sur l'eau tels que des hydrocarbures qui ne présente pas les inconvénients de l'art antérieur et qui en particulier permet un ramassage efficace desdits objets flottants.

A cet effet, est propose un dispositif de ramassage d'objets flottants sur l'eau tels que des hydrocarbures et comprenant :
- une enveloppe réalisée dans un matériau souple et imperméable à l'eau et aux objets flottants, présentant une bouche en amont et un orifice d'évacuation en aval,
- une ossature pliable et rigide, disposée à l'intérieur de l'enveloppe et fixée à celle-ci au niveau de ladite bouche et dudit orifice d'évacuation,
- au moins un boudin gonflable fixé à l'enveloppe et s'étendant sur la longueur de l'enveloppe, et
- un dispositif de génération de gaz comprimé prévu pour gonfler le ou chaque boudin gonflable.

Avantageusement, le ou chaque boudin gonflable est disposé de manière à ce que lorsqu'il est déployé, il est hors de l'eau.

Avantageusement, l'ossature comprend un anneau principal, des anneaux amont disposés en amont de l'anneau principal, des anneaux aval disposés en aval de l'anneau principal et des biellettes d'extensions reliant chaque anneau à/aux anneaux voisins.

Avantageusement, les dimensions des anneaux amont se réduisent en progressant vers l'avant du dispositif de ramassage.

Avantageusement, l'anneau aval le plus en aval, supporte une barre de maintien à laquelle est fixée une partie de l'enveloppe formant la limite supérieure de l'orifice d'évacuation.

Avantageusement, ladite partie se prolonge vers l'avant de l'enveloppe, et ce prolongement est fixé sur les anneaux qu'elle traverse par des barres de fixation de manière à former un tunnel.

Avantageusement, le dispositif de ramassage comprend une hélice disposée dans ledit tunnel et dont l'axe de rotation est parallèle au sens de progressions du dispositif de ramassage et des moyens d'entraînement destinés à entraîner en rotation ladite hélice.

Avantageusement, les moyens d'entraînement comportent un arbre, au moins une roue à aubes montée sur ledit arbre et un ensemble de barres d'entraînement et de pignons qui transforment la rotation de la ou des roues à aubes en une rotation de l'hélice.

Avantageusement, le dispositif de ramassage comprend un premier dispositif d'obturation prévu pour prendre alternativement une position d'obturation dans laquelle rien ne peut pénétrer par la bouche, et une position d'ouverture dans laquelle l'eau et les objets flottants peuvent pénétrer dans la bouche et comprenant des moyens d'activation pouvant être commandés depuis la surface.

Avantageusement, le premier dispositif d'obturation comprend un volet de déflection monté en partie supérieure de la bouche par l'intermédiaire d'une charnière à axe horizontal et perpendiculaire au sens de progressions du dispositif de ramassage.

Avantageusement, le volet de déflection flotte.

Avantageusement, le premier dispositif d'obturation comprend un volet de plongée monté en partie inférieure de la bouche par l'intermédiaire d'une charnière à axe horizontal et perpendiculaire au sens de progressions du dispositif de ramassage.

Avantageusement, le volet de plongée coule.

Avantageusement, le dispositif de ramassage comporte, juste en aval de la bouche, un volet flottant monté libre en rotation autour d'un axe horizontal et perpendiculaire au sens de progressions du dispositif de ramassage.

Avantageusement, le dispositif de ramassage comprend un deuxième dispositif d'obturation prévu pour prendre alternativement une position d'obturation dans laquelle rien ne peut sortir par l'orifice d'évacuation, et une position d'ouverture dans laquelle l'eau peut sortir par l'orifice d'évacuation et comprenant des moyens d'activation pouvant être commandés depuis la surface.

Avantageusement, le dispositif de ramassage comprend une jupe s'étendant vers l'arrière dans le prolongement de l'enveloppe et dont le bord libre est suffisamment rigide pour se maintenir ouvert.

Avantageusement, la section de la bouche est inférieure ou égale à la section de l'orifice d'évacuation.

Avantageusement, le dispositif de ramassage comprend des flotteurs fixés en partie haute de l'enveloppe.

Avantageusement, le dispositif de ramassage comprend un lest fixé à la base du dispositif de ramassage.

Avantageusement, l'enveloppe présente un accès permettant d'accéder à l'intérieur de l'enveloppe et le dispositif de ramassage comprend une doublure tapissant le volume intérieur de l'enveloppe et fixé de manière amovible à l'ossature et éventuellement à l'enveloppe.

Avantageusement, le dispositif de ramassage comprend un évent comprenant un corps et un flotteur, le corps étant fixé par sa base et présentant une butée haute et une butée basse positionnée entre ladite base et ladite butée haute, et le flotteur étant disposé à l'intérieur du corps entre la butée basse et la butée haute.

Avantageusement, le diamètre de l'orifice d'évacuation s'élargit en progressant vers l'aval du dispositif de ramassage.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en coupe d'un dispositif de ramassage d'objets flottants selon l'invention en position de largage,
la Fig. 2 est une vue en coupe du dispositif de ramassage d'objets flottants de la Fig. 1 en position de gonflage,
la Fig. 3 est une vue en coupe du dispositif de ramassage d'objets flottants de la Fig. 1 en position de ramassage,
la Fig. 4 est un détail d'un évent du dispositif de ramassage d'objets flottants selon l'invention,
les Figs. 5a à 5c montrent différentes positions d'un premier dispositif d'obturation du dispositif de ramassage d'objets flottants selon l'invention,
les Figs. 6a à 6c montrent différentes positions d'un deuxième dispositif d'obturation du dispositif de ramassage d'objets flottants selon l'invention,
la Fig. 7 est une vue en coupe partielle d'un dispositif de ramassage d'objets flottants selon un autre mode de réalisation de l'invention, en position de ramassage,
la Fig. 8 est une vue de dessus du dispositif de ramassage d'objets flottants de la Fig. 7, et
la Fig. 9 est une vue d'un détail d'un orifice d'évacuation selon un autre mode de réalisation.

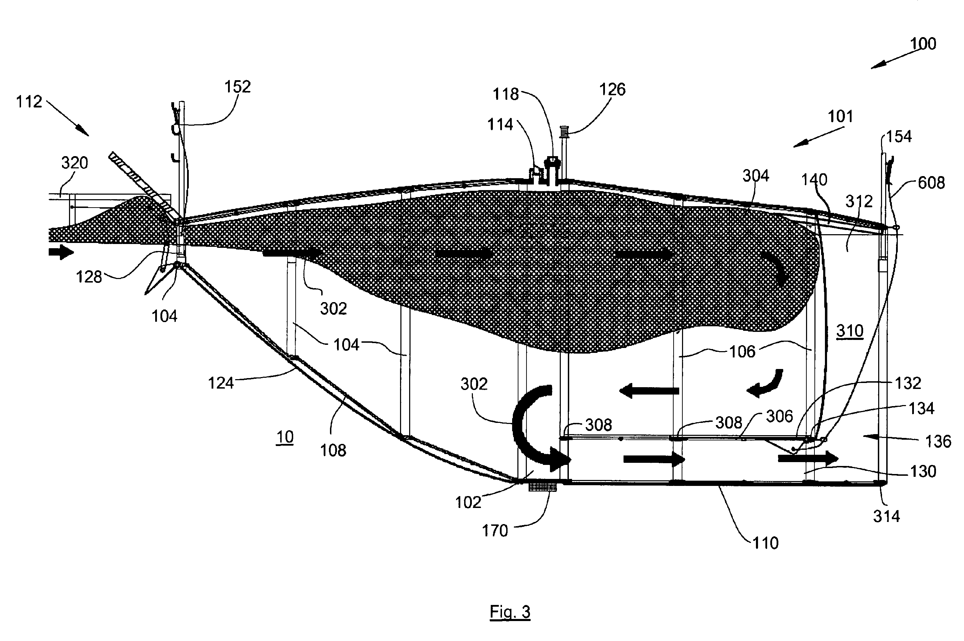

Dans la description qui suit, les termes relatifs à une position sont pris en référence à un dispositif de ramassage d'objets flottants en position de ramassage, c'est-à-dire lorsqu'il est à l'eau et tracté comme cela est représenté sur la Fig. 3. Les directions amont et aval sont prises en référence par rapport à la direction de déplacement d'un dispositif de ramassage lorsqu'il est tracté en position de ramassage.

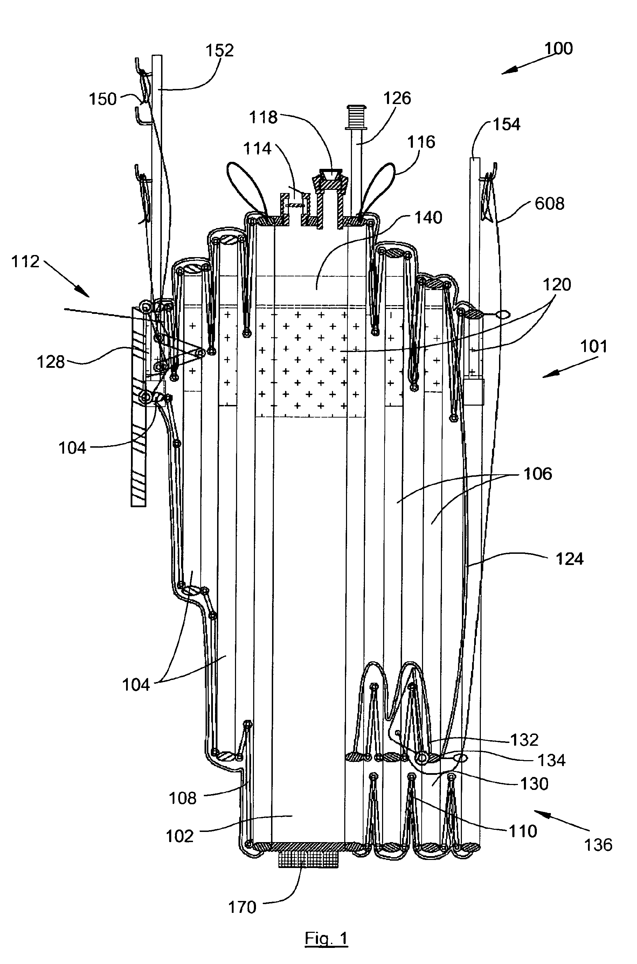

La Fig. 1 montre un dispositif de ramassage 100 d'objets flottants sur l'eau tels que des hydrocarbures selon l'invention. Le dispositif de ramassage 100 est dans une phase de largage, c'est-à-dire dans une phase au cours de laquelle le dispositif de ramassage 100 est plié et peut être transporté sur les lieux du ramassage, par exemple par un hélicoptère et largué dans l'eau.

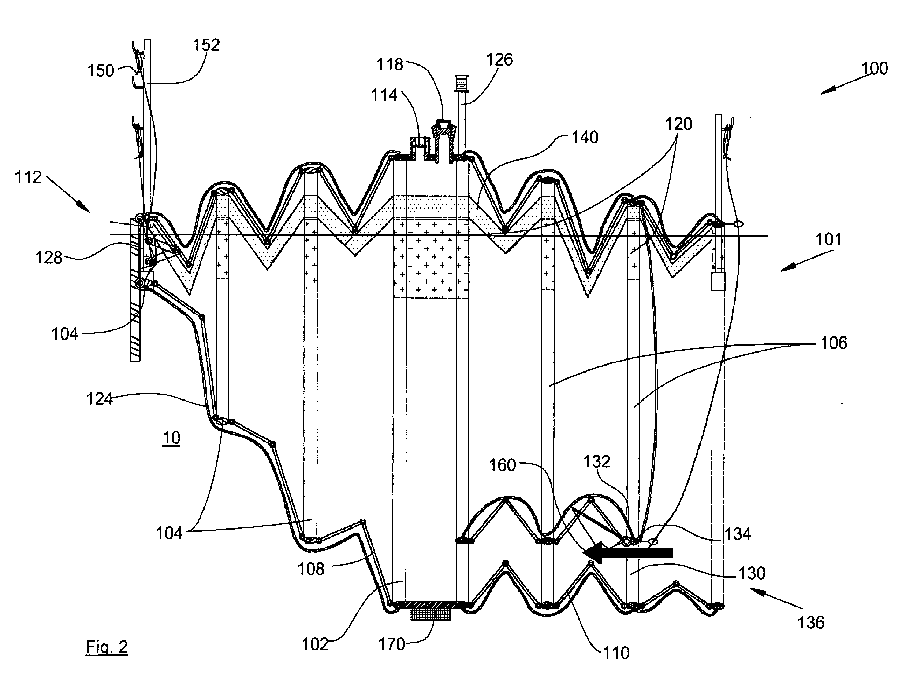

La Fig. 2 montre le dispositif de ramassage 100 dans une phase de gonflage, c'est-à-dire dans une phase au cours de laquelle le dispositif de ramassage 100 commence à être déployé dans l'eau 10.

La Fig. 3 montre un dispositif de ramassage 100 dans une phase de ramassage, c'est-à-dire dans une phase au cours de laquelle le dispositif de ramassage 100 est entièrement déployé dans l'eau 10 et est remorqué par au moins un bateau afin de ramasser les objets flottants.

Le dispositif de ramassage 100 comprend:
- une ossature 101 pliable et rigide, et
- une enveloppe 124 réalisée dans un matériau souple et imperméable à l'eau et aux objets flottants, et dans laquelle l'ossature 101 est disposée.

L'ossature 101 est de préférence réalisée en matériau métallique et elle comprend un anneau principal 102, des anneaux amont 104 disposés en amont de l'anneau principal 102, des anneaux aval 106 disposés en aval de l'anneau principal 102 et des biellettes d'extensions 108 et 110. Le nombre d'anneaux amont 104 et d'anneaux aval 106 dépend de la capacité volumique de l'enveloppe 124. Par exemple, dans le cas de l'enveloppe 124 représentée sur la Fig. 1 d'une longueur de 10m et d'une capacité volumique de 50 m3, trois anneaux amont 104 et deux anneaux aval 106 sont prévus.

Chaque anneau 102, 104, 106 peut prendre différentes formes comme par exemple une forme circulaire ou rectangulaire, et les anneaux 102, 104 et 106 sont disposés les uns à la suite des autres. Les axes des différents anneaux 102, 104, 106 sont tous sensiblement parallèles à la direction le long de laquelle est tracté le dispositif de ramassage 100.

Chaque anneau 102, 104, 106 est relié à/aux anneaux voisins par des biellettes d'extensions 108 et 110. Chaque biellette 108, 110 est prévue pour prendre une position de pliage et une position de dépliage. Dans sa position de pliage, la biellette 108, 110 est telle que les deux anneaux 102, 104, 106 qu'elle relie sont proches l'un de l'autre, ce qui correspond à la phase de largage de la Fig. 1 du dispositif de ramassage 100. Dans sa position de dépliage, la biellette 108, 110 est telle que les deux anneaux 102, 104, 106 qu'elle relie sont éloignés l'un de l'autre, ce qui correspond à la phase de ramassage de la Fig. 3 du dispositif de ramassage 100.

Dans le mode de réalisation de l'invention présenté ici, chaque biellette 108, 110 comprend deux tiges reliées entre elles par une rotule solidaire d'une extrémité libre de chacune de deux tiges, l'extrémité libre d'une tige étant reliée à l'un des anneaux et l'extrémité libre de l'autre tige étant reliée à l'autre anneau.

Dans le mode de réalisation de l'invention présenté ici, l'enveloppe 124 est constituée d'une demi-enveloppe amont qui est fixée sur l'anneau principal 102 et qui enveloppe les anneaux amont 104 et d'une demi-enveloppe aval qui est fixée sur l'anneau principal 102 et qui enveloppe les anneaux aval 106. La fixation de l'enveloppe 124 sur l'ossature 101 s'effectue par tous moyens de fixation adéquats. L'enveloppe 124 est réalisée dans un matériau souple pour être pliée et solide pour résister aux efforts Le matériau utilisé peut par exemple être du type caoutchouc synthétique ou élastomère. Bien sûr, il est possible de prévoir que l'enveloppe 124 est monobloc.

L'enveloppe 124 comprend, en amont, une bouche 128 et, en aval, un orifice d'évacuation 130. L'ossature 101 est fixée à l'enveloppe 124 au niveau de la bouche 128 et de l'orifice d'évacuation 130.

Pour éviter une différence de débit dans la bouche 128 et l'orifice d'évacuation 130, ce qui pourrait engendrer des surpressions à l'intérieur de l'enveloppe 124, la section de la bouche 128 est inférieure ou égale à la section de l'orifice d'évacuation 130.

Pour éviter l'apparition d'un phénomène de vortex au niveau de l'orifice d'évacuation 130 lors du ramassage des objets flottants, ce qui entraînerait leur évacuation par l'orifice d'évacuation 130, celui-ci doit être disposé à une profondeur suffisante. Dans le mode de réalisation de l'invention présenté ici, la hauteur de l'enveloppe est de 3 m, ce qui correspond sensiblement à la profondeur à laquelle se trouve l'orifice d'évacuation 130.

Lorsque le dispositif de ramassage 100 est en phase de ramassage, la bouche 128 se situe pour partie au-dessus du niveau de l'eau 10 et pour partie sous le niveau de l'eau 10 pour permettre l'entrée d'une épaisseur d'eau et des objets qui flottent à sa surface dans ladite bouche 128. La bouche 128 est délimitée par les dimensions intérieures de l'anneau amont 104 le plus en amont auquel l'enveloppe 124 est fixée. Pour réaliser la bouche 128, les dimensions des anneaux amont 104 se réduisent en progressant vers l'avant du dispositif de ramassage 100 de manière à former sensiblement un tronc de cône dont le sommet est ouvert et forme la bouche 128 et est orienté vers l'avant du dispositif de ramassage 100. Dans un mode de réalisation particulier de l'invention, les dimensions de la bouche 128 et de l'anneau 104 sont de l'ordre de 3 m * 0,4 m.

Lorsque le dispositif de ramassage 100 est en phase de ramassage, l'orifice d'évacuation 130 se situe en partie basse de l'enveloppe 124 et sous le niveau de l'eau 10 pour permettre la sortie de l'eau 10 et le maintien des objets qui flottent dans l'enveloppe 124. A cette fin, l'enveloppe 124 est ouverte à l'arrière et en partie basse. Pour maintenir la partie 132 de l'enveloppe 124 qui forme la limite supérieure de l'orifice d'évacuation 130, l'anneau aval 106, le plus en aval, supporte une barre de maintien 134 à laquelle ladite partie 132 est fixée.

Dans le mode de réalisation de l'invention présenté ici, l'anneau principal 102, l'anneau amont 104 le plus en amont et l'anneau aval 106 le plus en aval sont solidaires de l'enveloppe 124. L'anneau principal 102 comprend les éléments nécessaires à la manipulation et à l'utilisation du dispositif de ramassage 100. Par exemple, l'anneau principal 102 porte un évent 114, un raccord de pompage 118, des anneaux de manutention 116, un feu de signalisation 126, une balise de localisation ...

Le raccord de pompage 118 permet de raccorder une pompe dans le but de vider l'enveloppe 124.

Les anneaux de manutention 116 permettent d'accrocher le dispositif de ramassage 100 à un hélicoptère ou à tout autre moyen de transport afin de le transporter.

Le feu de signalisation 126 et la balise de localisation permettent le repérage du dispositif de ramassage 100, lorsqu'il est rempli et a été séparé du bateau qui le tractait.

La structure du dispositif de ramassage 100 doit être telle que lorsqu'il est largué en position de largage dans l'eau 10, la bouche 128 est en haut et l'orifice d'évacuation 130 est en bas. Pour faciliter ce positionnement, des flotteurs 120, constitués par exemple d'éléments en mousse, sont fixés en partie haute de l'enveloppe 124. Pour améliorer ce positionnement, un lest 170 est fixé à la base du dispositif de ramassage 100.

Le dispositif de ramassage 100 comprend au moins un, et de préférence deux boudins gonflables 140, fixés à l'enveloppe 124 et de part et d'autre de celle-ci et de préférence à l'extérieur de celle-ci. Lorsqu'il est gonflé, chaque boudin gonflable 140 s'étend de manière sensiblement horizontale sur la longueur de l'enveloppe 124 de manière à permettre le dépliage complet de l'ossature 101 et de l'enveloppe 124, c'est-à-dire au moins entre l'anneau amont 104 portant la bouche 128 et l'anneau aval 106 portant l'orifice d'évacuation 130. Ainsi lorsqu'il est gonflé, chaque boudin gonflable 140 se trouve sur l'un des flancs latéraux du dispositif de ramassage 100.

Un dispositif de génération de gaz comprimé est prévu pour gonfler chaque boudin gonflable 140. Par exemple, le dispositif de génération de gaz comprimé est constitué d'un ensemble de cartouches de gaz comprimé, en particulier de l'air, chacune étant disposée dans un boudin gonflable 140, et chaque cartouche de gaz comprimé peut être activée depuis l'extérieur du boudin gonflable 140 par l'intermédiaire d'un commutateur déporté 150 qui est de préférence disposé sur un mât 152 qui s'élève au-dessus du niveau de l'eau 10 à l'avant du dispositif de ramassage 100. Lors de l'activation des cartouches de gaz comprimé, les boudins gonflables 140 se gonflent, entraînant le déploiement de l'enveloppe 124 et de l'ossature pliable 101 qui passent par la phase de gonflage pour atteindre la phase de ramassage.

Pour éviter le soulèvement du dispositif de ramassage 100, les boudins gonflables 140 sont disposés de manière à ce que lorsqu'ils sont déployés, ils sont hors de l'eau 10.

La structure simple, la facilité de mise en oeuvre ainsi que l'utilisation d'une enveloppe 124 imperméable font du dispositif de ramassage 100, un dispositif performant.

Un premier dispositif d'obturation 112 est prévu pour obturer la bouche 128. Le premier dispositif d'obturation 112 est tel qu'il peut prendre alternativement une position d'obturation dans laquelle rien ne peut pénétrer dans l'enveloppe 124 par la bouche 128, et une position d'ouverture dans laquelle l'eau 10 et les objets flottants peuvent pénétrer dans la bouche 128. D'une manière générale, le premier dispositif d'obturation 112 est en position d'obturation au cours des phases de largage, de gonflage de l'enveloppe 124 et de transport du dispositif de ramassage 100 vers une zone de vidage après son remplissage. Et le premier dispositif d'obturation 112 est en position d'ouverture au cours de la phase de ramassage des objets flottants.

Pour éviter l'écoulement des objets flottants emmagasinés dans l'enveloppe 124 lors du remorquage du dispositif une fois rempli, un deuxième dispositif d'obturation 136 est prévu pour obturer l'orifice d'évacuation. Le deuxième dispositif d'obturation 136 est tel qu'il peut prendre alternativement une position d'obturation dans laquelle rien ne peut sortir de l'enveloppe 124 par l'orifice d'évacuation 130, et une position d'ouverture dans laquelle l'eau 10 peut sortir par l'orifice d'évacuation 130. D'une manière générale, le deuxième dispositif d'obturation 136 est en position d'obturation au cours de la phase de transport du dispositif de ramassage 100 vers une zone de vidage après son remplissage. Et le deuxième dispositif d'obturation 136 est en position d'ouverture au cours des phases de largage de l'enveloppe 124, de gonflage de l'enveloppe 124 et de ramassage des objets flottants.

Pour être tracté par un ou deux bateaux, le dispositif de ramassage 100 comprend des câbles de remorquage qui sont fixés au voisinage de la bouche 128. Avantageusement, chaque câble de remorquage est fixé à l'enveloppe 124 par l'intermédiaire d'un barrage flottant 320 qui est lui-même intégré au dispositif de ramassage 100. Ainsi, lors du ramassage, les barrages flottants forment un entonnoir qui dirige les objets flottants vers la bouche 128. Le gonflage de chaque barrage flottant 320 peut s'effectuer également à l'aide du dispositif de génération de gaz comprimé.

Le remorquage du dispositif de ramassage 100 en phase de ramassage entraîne la création d'un courant d'eau 302 à l'intérieur de l'enveloppe 124. Le courant d'eau 302 entraîne les objets flottants 304 à l'arrière de l'enveloppe 124, et pour éviter que les objets flottants 304 sortent par l'orifice d'évacuation, l'enveloppe 124 présente un pli 306 qui forme un retour à l'intérieur de l'enveloppe 124. Le pli 306 s'étend de manière sensiblement horizontalement vers l'avant de l'enveloppe 124 en prolongeant la partie 132 de l'enveloppe 124 qui forme la limite supérieure de l'orifice d'évacuation 130 et la barre de maintien 134. Dans le mode de réalisation présenté sur la Fig. 3, le pli 306 s'étend jusqu'à l'anneau principal 102 à travers chacun des anneaux aval 106. La fixation du pli 306 sur les anneaux 102 et 106 qu'il traverse est assurée par des barres de fixation 308 fixées auxdits anneaux 102 et 106. Le pli 306 forme ainsi un tunnel par lequel s'évacue l'eau 10. Le courant d'eau 302 présente ainsi, depuis l'arrière du dispositif de ramassage 100, un retour vers l'avant du dispositif de ramassage 100 et un nouveau changement de direction vers l'arrière du dispositif de ramassage 100 au niveau de l'entrée du tunnel.

Pour faciliter l'évacuation de l'eau 10 par l'orifice d'évacuation 130, une zone de dépression 310 est créée à l'arrière de l'enveloppe 124. La zone de dépression 310 est créée ici par la mise en place d'une jupe 312 de forme sensiblement cylindrique qui s'étend vers l'arrière du dispositif de ramassage 100 et dans le prolongement de l'enveloppe 124. La jupe 312 prolonge l'enveloppe 124 et son bord libre est suffisamment rigide pour se maintenir ouvert, par exemple la mise en place d'un anneau de maintien 314 le long du bord libre facilite ce maintien. Le bord libre de la jupe 312 est prévu pour rester sous le niveau de l'eau 10.

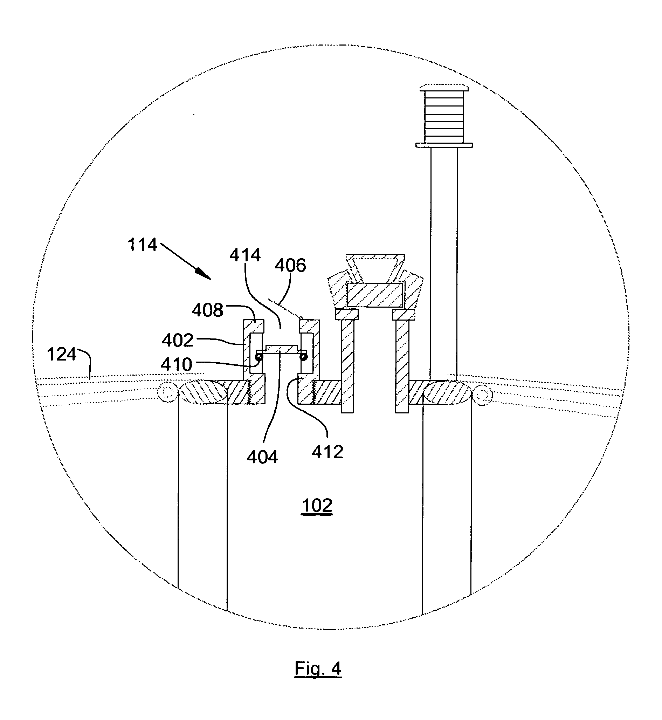

La Fig. 4 montre l'évent 114 en coupe. L'évent 114 permet l'évacuation de l'air contenu dans l'enveloppe 124 lors du ramassage des objets flottants 304. L'évent 114 comprend un corps 402, un flotteur 404.

Le corps 402 se présente sous la forme d'un cylindre à axe vertical et creux. La base 412 du cylindre est fixée sur l'anneau principal 102. Le corps 402 comprend une butée haute 408 et une butée basse 410. Dans le mode de réalisation de l'invention présenté ici, la butée haute 408 est constituée par un rebord horizontal qui s'étend au sommet du cylindre 402 vers l'intérieur de celui-ci. La butée haute 408 délimite une ouverture 414. La butée basse 410 est positionnée entre la base 412 et la butée haute 408. La butée basse 410 est ici constituée par des plots qui font saillie vers l'intérieur du cylindre 402.

Le flotteur 404 est disposé à l'intérieur du corps 402 entre la butée basse 410 et la butée haute 408 et sa densité est telle qu'il flotte sur les hydrocarbures. Le flotteur 404 est mobile en translation à l'intérieur du corps 402 entre une position basse dans laquelle il repose sur la butée basse 410 et une position haute dans laquelle il vient en butée sous la butée haute 408. Les dimensions du flotteur 404 sont inférieures aux dimensions intérieures du cylindre 402 créant ainsi un passage par lequel l'air peut circuler. En position haute, le flotteur 404 vient obturer l'ouverture 414 et empêche le rejet de l'eau 10 ou des objets flottants, et en particulier des hydrocarbures, par l'ouverture 414 lorsque les hydrocarbures remplissent l'enveloppe 124. En position basse, le flotteur 404 autorise l'évacuation de l'air par l'ouverture 414 en particulier lors du ramassage.

Dans un mode de réalisation préféré, l'évent 114 comprend également un clapet 406 monté sur le corps 402 et mobile en rotation autour d'une charnière à axe horizontal entre une position de fermeture dans laquelle il obture l'ouverture 414 et une position d'ouverture dans laquelle il laisse libre le passage à travers l'ouverture 414. Dans la position de fermeture, le clapet 406 est plaqué contre l'ouverture 414 et en position d'ouverture, le clapet 406 est relevé. Le passage en position d'ouverture s'effectue lorsqu'il y a une surpression à l'intérieur de l'enveloppe 124, ce qui permet l'évacuation de l'air de l'enveloppe 124, cette position correspond à la position basse du flotteur. En position de fermeture, le clapet 406 empêche l'air de pénétrer dans l'enveloppe 124, cette position est particulièrement intéressante, en phase de gonflage, comme cela est expliqué ci-après.

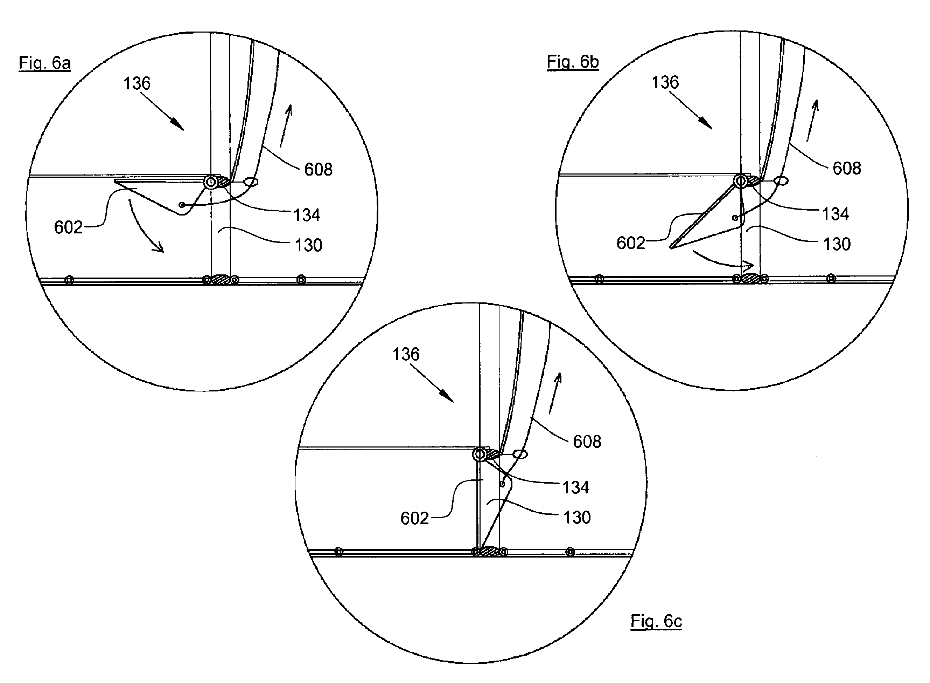

La Fig. 6a montre le deuxième dispositif d'obturation 136 en position d'ouverture. La Fig. 6b montre le deuxième dispositif d'obturation 136 en cours d'obturation. La Fig. 6c montre le deuxième dispositif d'obturation 136 en position d'obturation. Le deuxième dispositif d'obturation 136 comprend un volet de fermeture 602 monté en partie supérieure de l'orifice d'évacuation 130, par exemple sur la barre de maintien 134 par l'intermédiaire d'une charnière à axe horizontal et perpendiculaire au sens de progressions du dispositif de ramassage 100.

La fermeture du volet de fermeture 602 et, par conséquent du deuxième dispositif d'obturation 136, est obtenue par activation de moyens d'activation pouvant être commandés depuis la surface, comme par exemple un câble de tirage 608 dont une extrémité est fixée au volet de fermeture 602 et dont l'autre extrémité est disponible depuis la surface de l'eau 10 par exemple au niveau d'un mât 154 disposé à l'arrière du dispositif de ramassage 100. Le guidage du câble de tirage 608 entre le volet de fermeture 602 et le mât 154 est assuré par des bagues fixées sur l'enveloppe 124 et à l'intérieur desquelles passe le câble de tirage 608.

Le sens de tirage du câble de tirage 808 et le mouvement de fermeture du volet de fermeture 602 sont représentés par les flèches des différentes Figs. 6a, 6b et 6c.

L'ouverture du volet de fermeture 602 et, par conséquent du deuxième dispositif d'obturation 136, est obtenue grâce à un ressort de rappel qui contraint le volet de fermeture 602 en position d'ouverture lorsque le câble de tirage 608 est relâché.

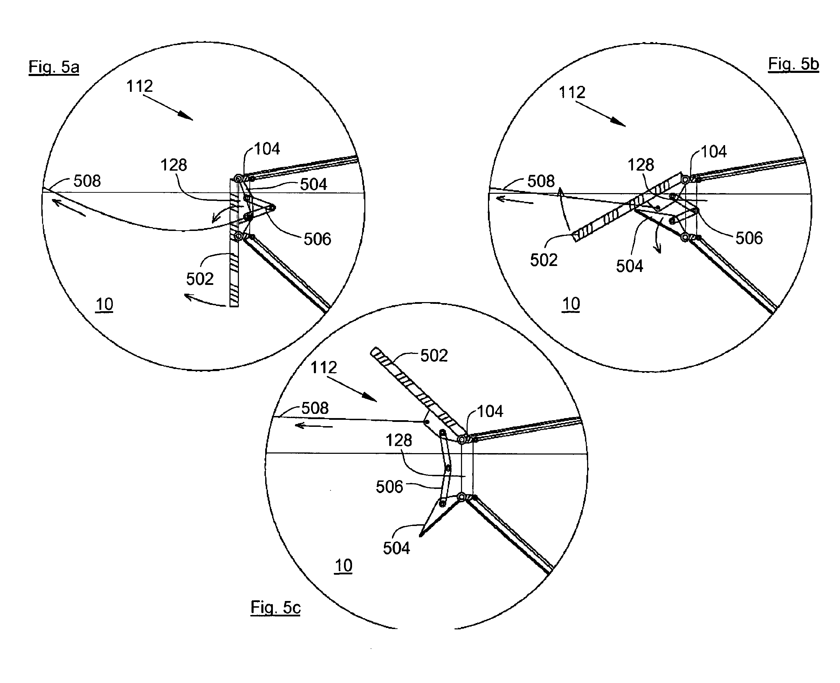

La Fig. 5a montre le premier dispositif d'obturation 112 en position d'obturation. La Fig. 5b montre le premier dispositif d'obturation 112 en cours d'ouverture. La Fig. 5c montre le premier dispositif d'obturation 112 en position d'ouverture. Le premier dispositif d'obturation 112 comprend un volet de déflection 502 monté en partie supérieure de la bouche 128, par exemple sur l'anneau amont 104 qui délimite la bouche 128 par l'intermédiaire d'une charnière à axe horizontal et perpendiculaire au sens de progressions du dispositif de ramassage 100.

En position d'obturation, le volet de déflection 502 vient en appui contre cet anneau amont 104 de manière à obturer la bouche 128. En position d'ouverture, l'extrémité libre du volet de déflection 502 est levée et se positionne au-dessus de la surface de l'eau 10. Le volet de déflection 502 est réalisé de manière à flotter pour éviter de faire plonger la bouche 128 et il permet d'écraser les vagues lors de la phase de ramassage comme cela est montré en Fig. 3, et ainsi de guider les objets flottants 304 à l'intérieur de la bouche 128.

Pour guider au mieux les objets flottants, un volet de plongée 504 est monté en partie inférieure de la bouche 128, par exemple sur l'anneau amont 104 qui délimite la bouche 128 par l'intermédiaire d'une charnière à axe horizontal et perpendiculaire au sens de progressions du dispositif de ramassage 100.

En position d'obturation, le volet de plongée 504 se loge à l'intérieur de l'anneau amont 104. En position d'ouverture, l'extrémité libre du volet de plongée 504 est abaissée et plonge sous l'eau 10. Le volet de plongée 504 est réalisé de manière à couler pour éviter de soulever la bouche 128 et il permet de guider l'eau 10 et les objets flottants 304 à l'intérieur de la bouche 128.

Pour manoeuvrer facilement et simultanément le volet de déflection 502 et le volet de plongée 504, un jeu de biellettes 506 est monté entre les deux volets 502 et 504. Une première biellette est montée libre en rotation sur le volet de déflection 502, une deuxième biellette est montée libre en rotation sur le volet de plongée 504 et les extrémités libres des deux biellettes sont montées libre en rotation l'une avec l'autre. Ainsi, l'ouverture, respectivement la fermeture, du volet de déflection 502 entraîne l'ouverture, respectivement la fermeture, du volet de plongée 504.

L'ouverture du volet de déflection 502 et, par conséquent du premier dispositif d'obturation 112, est obtenue par activation de moyens d'activation pouvant être commandés depuis la surface, comme par exemple un câble de tirage 508 dont une extrémité est fixée au volet de déflection 502 et dont l'autre extrémité est disponible depuis la surface de l'eau 10 par exemple au niveau du mât 152.

Le sens de tirage du câble de tirage 508 et les mouvements d'ouverture du volet de déflection 502 et du volet de plongée 504 sont représentés par les flèches des différentes Figs. 5a, 5b et 5c.

La fermeture du volet de déflection 502 et, par conséquent du premier dispositif d'obturation 112, est obtenue grâce à un ressort de rappel qui contraint le volet de déflection 502 en position d'obturation lorsque le câble de tirage 508 est relâché.

Le fonctionnement du dispositif de ramassage 100 est le suivant.

Le dispositif de ramassage 100 est transporté en position pliée comme représenté sur la Fig. 1 sur le lieu où le ramassage doit être effectué.

Lorsque le dispositif de ramassage 100 est dans l'eau 10, le premier dispositif d'obturation 112 est en position d'obturation, le clapet 406 est fermé, et le deuxième dispositif d'obturation 136 est en position d'ouverture permettant ainsi le remplissage de l'enveloppe 124 pliée par de l'eau.

Les dispositifs de génération de gaz comprimé sont activés par activation du commutateur adéquat pour libérer le gaz comprimé et gonfler chaque boudin gonflable 140. Au cours de la phase de gonflage (Fig. 2), l'extension des boudins gonflables 140 entraîne le déploiement de l'ossature pliable 101. Ce déploiement entraîne un appel d'air à l'intérieur de l'enveloppe 124. Du fait de cet appel d'air, le clapet 406 est plaqué contre l'ouverture 414 et le premier dispositif d'obturation 112 reste en position d'obturation. L'air est ainsi empêché de pénétrer dans l'enveloppe 124. L'enveloppe 124 se remplit alors d'eau 10 du fait que seul le deuxième dispositif d'obturation 136 est en position d'ouverture. La flèche 160 montre l'entrée d'eau à l'intérieur de l'enveloppe 124 par l'orifice d'évacuation 130.

A la fin de la phase de gonflage, l'enveloppe 124 et l'ossature pliable 101 sont entièrement déployées et l'enveloppe est remplie majoritairement d'eau 10 et non d'air, ce qui aurait eu des conséquences sur la position de sa ligne de flottaison et sur sa prise au vent.

Le dispositif de ramassage 100 est alors attelé à un ou deux bateaux par l'intermédiaire des câbles de remorquage et des barrages flottants et il est tracté jusqu'au lieu de ramassage.

Le premier dispositif d'obturation 112 est alors manoeuvré par l'intermédiaire du câble de tirage 508 pour passer en position d'ouverture. Le déplacement du dispositif de ramassage 100 entraîne la création du courant d'eau 302 et le ramassage des objets flottants 304 dans l'enveloppe 124. Le maintien de la tension dans le câble de tirage 508 maintient le premier dispositif d'obturation 112 en position d'ouverture.

Lorsque le ramassage est fini ou que l'enveloppe 124 est pleine, le câble de tirage 508 est relâché, ce qui entraîne, par l'intermédiaire du ressort de rappel, le retour du premier dispositif d'obturation 112 en position d'obturation. Le deuxième dispositif d'obturation 136 doit être manoeuvré par l'intermédiaire du câble d'activation 608 pour passer en position d'obturation. L'enveloppe 124 est alors fermée et elle peut être transportée jusqu'à la zone de vidage.

Pour faciliter le nettoyage de l'enveloppe 124, celle-ci est doublée à l'intérieur avec une doublure qui tapisse le volume intérieur de l'enveloppe 124. L'enveloppe 124 conserve alors sa fonction structurelle, et la fonction de volume de stockage des objets flottants 304 est remplie par la doublure qui peut être réalisée dans un matériau moins résistant, moins onéreux et plus facilement recyclable.

Après vidage de la doublure, celle-ci peut être retirée, détruite ou recyclée, sans qu'il soit nécessaire de changer l'enveloppe 124, d'où un coût moindre.

A cette fin, l'enveloppe 124 présente à l'arrière un accès, par exemple du type porte de tente avec une fermeture à glissière, qui permet d'accéder à l'intérieur de l'enveloppe 124. La doublure est fixée de manière amovible à l'ossature 101 et en particulier aux anneaux 102, 104 et 106 et éventuellement à l'enveloppe 124. En accédant à l'intérieur de l'enveloppe 124, un technicien peut attacher ou détacher la doublure.

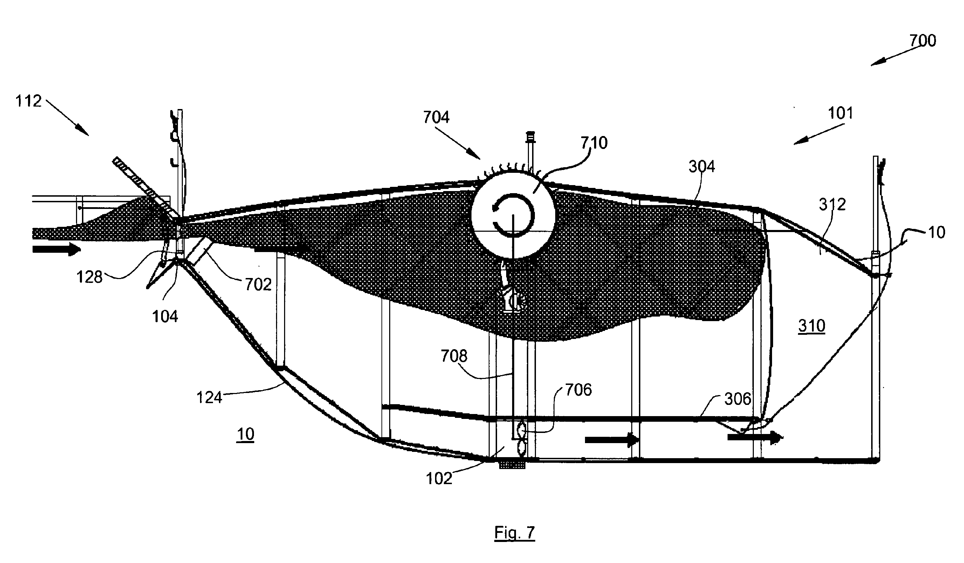

La Fig. 7 montre un dispositif de ramassage 700 d'objets flottants sur l'eau tels que des hydrocarbures selon un autre mode de réalisation de l'invention.

Le dispositif de ramassage 700 est disposé dans l'eau 10 et comporte:
- une ossature 101 pliable et rigide, et
- une enveloppe 124 réalisée dans un matériau souple et imperméable à l'eau et aux objets flottants, et dans laquelle l'ossature 101 est disposée.

Le dispositif de ramassage 700 comporte en amont une bouche 128 et un premier dispositif d'obturation 112 est prévu pour obturer la bouche 128.

Juste en aval de la bouche 128, le dispositif de ramassage 700 comporte un volet flottant 702 qui est monté libre en rotation par l'intermédiaire d'une charnière fixée à sa base et qui est à axe horizontal et perpendiculaire au sens de progressions du dispositif de ramassage 700.

En fonction de la vitesse avec laquelle l'eau 10 entre dans la bouche 128, le volet flottant 702 va plus ou moins pivoter vers l'arrière pour laisser passer plus ou moins d'eau 10. Ainsi à l'arrêt, le volet flottant 702 est en position verticale et obture la bouche 128, empêchant l'eau 10 et les objets flottants 304 de sortir du dispositif de ramassage 700. Plus la vitesse augmente, plus le basculement du volet flottant 702 est important, et permet de libérer un grand espace à l'intérieur de la bouche 128.

La zone de dépression 310 créée par la jupe 312 facilite l'évacuation de l'eau 10 qui est dans le dispositif de ramassage 700.

Lorsque la vitesse du dispositif de ramassage 700 par rapport à l'eau 10 devient trop importante, cette aide à l'évacuation de l'eau n'est plus suffisante, et l'eau 10 se stocke dans le dispositif de ramassage 700, ce qui peut provoquer un débordement et une expulsion des objets flottants 304 emmagasinés.

Pour éviter ce phénomène, une hélice 706 est disposée dans le tunnel formé par le pli 306 par lequel l'eau 10 s'évacue du dispositif de ramassage 700.

L'hélice 706 est fixée ici au niveau de l'anneau principal 102 et est entraînée en rotation par l'intermédiaire de moyens d'entraînement 704, 708. L'axe de rotation de l'hélice 706 est parallèle au sens de progressions du dispositif de ramassage 700.

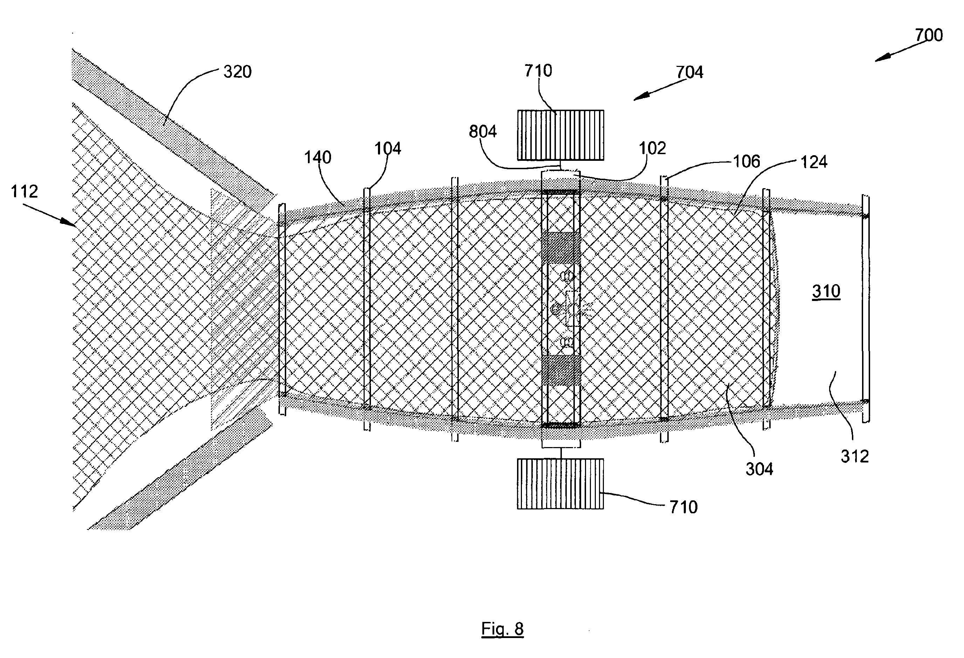

La Fig. 8 montre le dispositif de ramassage 700 en vue de dessus.

Selon le mode de réalisation de l'invention présenté sur les Figs. 7 et 8, les moyens d'entraînement 704 comportent un arbre 804, au moins une roue à aubes 710 (ici deux pour des raisons d'équilibrage) montée sur ledit arbre 804 et un ensemble de barres d'entraînement et de pignons 708 qui transforment la rotation de la ou des roues à aubes 710 en une rotation de l'hélice 706.

Les roues à aubes 710 sont disposées de part et d'autre du dispositif de ramassage 700 et plongent dans l'eau 10. L'arbre 804 est horizontal et perpendiculaire au sens de progressions du dispositif de ramassage 700 et qui est relié à l'ensemble de barres d'entraînement 708.

Le déplacement de l'eau 10 par rapport aux roues à aubes 710 entraîne leur rotation qui est transmise à l'hélice 706 qui, par rotation, expulse l'eau contenue dans le dispositif de ramassage 700.

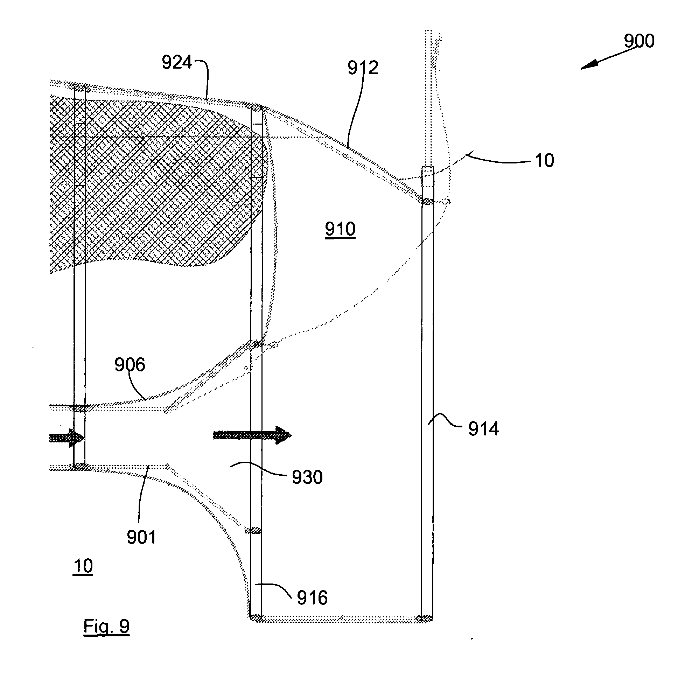

La Fig. 9 montre un détail d'un dispositif de ramassage 900 au niveau de l'orifice d'évacuation 930.

Le dispositif de ramassage 900 est disposé dans l'eau 10 et comporte:
- une ossature 901 pliable et rigide, et
- une enveloppe 924 réalisée dans un matériau souple et imperméable à l'eau et aux objets flottants, et dans laquelle l'ossature 901 est disposée.

L'orifice d'évacuation 930 par où s'évacue l'eau, est disposé en aval de l'enveloppe 924, et à la sortie du tunnel formée par le pli 906 de l'enveloppe 924.

Le diamètre de l'orifice d'évacuation 930 s'élargit en progressant vers l'aval du dispositif de ramassage 900 pour faciliter l'évacuation de l'eau dudit dispositif de ramassage 900.

Pour accroître la zone de dépression 910 et suivre le profil de l'orifice d'évacuation 930, la jupe 912 est agrandie vers le fond de l'eau 10. A cette fin, l'anneau aval 916 qui supporte le diamètre le plus grand de l'orifice d'évacuation 930 est agrandi ainsi que l'anneau de maintien 914.

Bien sûr, les modes de réalisation des Figs. 7 et 9 peuvent être combinés.

Bien entendu, la présente invention telle que définie par les revendications ci-jointes n'est pas limitée aux exemples et modes de réalisation décrits et représentés, mais elle est susceptible de nombreuses variantes accessibles à l'homme de l'art.

Par exemple, l'invention a été plus particulièrement décrite dans le cas d'une enveloppe en deux parties, mais si la longueur du dispositif de ramassage est trop importante, l'enveloppe peut comporter plus de deux parties. L'ossature pliable comprend alors plusieurs anneaux principaux auxquels sont fixées lesdites parties de manière à former un ensemble fermé et entre lesquels sont disposés des anneaux intermédiaires ayant une structure similaire à celle des anneaux amont et aval. La contenance du dispositif de ramassage peut alors dépasser les 5m³ pour atteindre 1000m³.

## Revendications

1. Dispositif de ramassage (100, 700, 900) d'objets flottants (304) sur l'eau (10) tels que des hydrocarbures et comprenant :
- une enveloppe (124, 924) réalisée dans un matériau souple et imperméable à l'eau et aux objets flottants (304), présentant une bouche (128) en amont et un orifice d'évacuation (130, 930) en aval,
- au moins un boudin gonflable (140) fixé à l'enveloppe (124, 924) et s'étendant sur la longueur de l'enveloppe (124, 924), et
- un dispositif de génération de gaz comprimé prévu pour gonfler le ou chaque boudin gonflable (140), **caractérisé en ce que** le dispositif comprend une ossature (101, 901) pliable et rigide, disposée à l'intérieur de l'enveloppe (124, 924) et fixée à celle-ci au niveau de ladite bouche (128) et dudit orifice d'évacuation (130, 930)

2. Dispositif de ramassage (100, 700, 900) selon la revendication 1, **caractérisé en ce que** le ou chaque boudin gonflable (140) est disposé de manière à ce que lorsqu'il est déployé, il est hors de l'eau (10).

3. Dispositif de ramassage (100, 700, 900) selon l'une des revendications 1 ou 2, **caractérisé en ce que** l'ossature (101, 901) comprend un anneau principal (102), des anneaux amont (104) disposés en amont de l'anneau principal (102), des anneaux aval (106, 916) disposés en aval de l'anneau principal (102) et des biellettes d'extensions (108, 110) reliant chaque anneau (102, 104, 106, 916) à/aux anneaux voisins.

4. Dispositif de ramassage (100, 700, 900) selon la revendication 3, **caractérisé en ce que** les dimensions des anneaux amont (104) se réduisent en progressant vers l'avant du dispositif de ramassage (100, 700, 900).

5. Dispositif de ramassage (100, 700, 900) selon l'une des revendications 3 ou 4, **caractérisé en ce que** l'anneau aval (106, 916) le plus en aval, supporte une barre de maintien (134) à laquelle est fixée une partie (132) de l'enveloppe (124, 924) formant la limite supérieure de l'orifice d'évacuation (130, 930).

6. Dispositif de ramassage (100, 700, 900) selon la revendication 5, **caractérisé en ce que** ladite partie (132) se prolonge vers l'avant de l'enveloppe (124, 924), et **en ce que** ce prolongement (306, 906) est fixé sur les anneaux (102, 106, 916) qu'elle traverse par des barres de fixation (308) de manière à former un tunnel.

7. Dispositif de ramassage (700) selon la revendication 6, **caractérisé en ce qu'**il comprend une hélice (706) disposée dans ledit tunnel et dont l'axe de rotation est parallèle au sens de progressions du dispositif de ramassage (700) et des moyens d'entraînement (704, 708) destinés à entraîner en rotation ladite hélice (706).

8. Dispositif de ramassage (700) selon la revendication 7, **caractérisé en ce que** les moyens d'entraînement (704) comportent un arbre (804), au moins une roue à aubes (710) montée sur ledit arbre (804) et un ensemble de barres d'entraînement et de pignons (708) qui transforment la rotation de la ou des roues à aubes (710) en une rotation de l'hélice (706).

9. Dispositif de ramassage (100, 700, 900) selon l'une des revendications 1 à 8, **caractérisé en ce qu'**il comprend un premier dispositif d'obturation (112) prévu pour prendre alternativement une position d'obturation dans laquelle rien ne peut pénétrer par la bouche (128), et une position d'ouverture dans laquelle l'eau (10) et les objets flottants peuvent pénétrer dans la bouche (128) et comprenant des moyens d'activation (508) pouvant être commandés depuis la surface.

10. Dispositif de ramassage (100, 700, 900) selon la revendication 9, **caractérisé en ce que** le premier dispositif d'obturation (112) comprend un volet de déflection (502) monté en partie supérieure de la bouche (128) par l'intermédiaire d'une charnière à axe horizontal et perpendiculaire au sens de progressions du dispositif de ramassage (100).

11. Dispositif de ramassage (100, 700, 900) selon la revendication 10, **caractérisé en ce que** le volet de déflection (502) flotte.

12. Dispositif de ramassage (100, 700, 900) selon l'une des revendications 10 ou 11, **caractérisé en ce que** le premier dispositif d'obturation (112) comprend un volet de plongée (504) monté en partie inférieure de la bouche (128) par l'intermédiaire d'une charnière à axe horizontal et perpendiculaire au sens de progressions du dispositif de ramassage (100, 700, 900).

13. Dispositif de ramassage (100, 700, 900) selon la revendication 12, **caractérisé en ce que** le volet de plongée (504) coule.

14. Dispositif de ramassage (700) selon l'une des revendications 9 à 13, **caractérisé en ce qu'**il comporte, juste en aval de la bouche (128), un volet flottant (702) monté libre en rotation autour d'un axe horizontal et perpendiculaire au sens de progressions du dispositif de ramassage (700).

15. Dispositif de ramassage (100, 700, 900) selon l'une des revendications 1 à 14,**caractérisé en ce qu'**il comprend un deuxième dispositif d'obturation (136) prévu pour prendre alternativement une position d'obturation dans laquelle rien ne peut sortir par l'orifice d'évacuation (130, 930), et une position d'ouverture dans laquelle l'eau (10) peut sortir par l'orifice d'évacuation (130, 930) et comprenant des moyens d'activation (608) pouvant être commandés depuis la surface.

16. Dispositif de ramassage (100, 700, 900) selon l'une des revendications 1 à 15, **caractérisé en ce qu'**il comprend une jupe (312, 912) s'étendant vers l'arrière dans le prolongement de l'enveloppe (124, 924) et dont le bord libre est suffisamment rigide pour se maintenir ouvert.

17. Dispositif de ramassage (100, 700, 900) selon l'une des revendications 1 à 16, **caractérisé en ce que** la section de la bouche (128) est inférieure ou égale à la section de l'orifice d'évacuation (130).

18. Dispositif de ramassage (100, 700, 900) selon l'une des revendications 1 à 17, **caractérisé en ce qu'**il comprend des flotteurs (120) fixés en partie haute de l'enveloppe (124, 924).

19. Dispositif de ramassage (100, 700, 900) selon l'une des revendications 1 à 18, **caractérisé en ce qu'**il comprend un lest (170) fixé à la base du dispositif de ramassage (100, 700, 900).

20. Dispositif de ramassage (100, 700, 900) selon l'une des revendications 1 à 19, **caractérisé en ce que** l'enveloppe (124, 924) présente un accès permettant d'accéder à l'intérieur de l'enveloppe (124, 924) et **en ce que** le dispositif de ramassage (100, 700, 900) comprend une doublure tapissant le volume intérieur de l'enveloppe (124, 924) et fixé de manière amovible à l'ossature (101, 901) et éventuellement à l'enveloppe (124, 924).

21. Dispositif de ramassage (100, 700, 900) selon l'une des revendications 1 à 20, **caractérisé en ce qu'**il comprend un évent (114) comprenant un corps (402) et un flotteur (404), le corps (402) étant fixé par sa base (412) et présentant une butée haute (408) et une butée basse (410) positionnée entre ladite base (412) et ladite butée haute (408), et le flotteur (404) étant disposé à l'intérieur du corps (402) entre la butée basse (410) et la butée haute (408).

22. Dispositif de ramassage (900) selon l'une des revendications 1 à 21, **caractérisé en ce que** le diamètre de l'orifice d'évacuation (930) s'élargit en progressant vers l'aval du dispositif de ramassage (900).

## Claims

1. Device (100, 700, 900) for picking up floating objects (304) on water (10), such as hydrocarbons, and comprising:
- an envelope (124, 924) produced from a flexible material impermeable to water and to floating objects (304), having a mouth (128) upstream and a discharge orifice (130, 930) downstream,
- at least one inflatable tube (140) fixed to the envelope (124, 924) and extending over the length of the envelope (124, 924), and
- a device for generating compressed gas designed to inflate the or each inflatable tube (140),
**characterised in that** the device comprises a foldable rigid framework (101, 901), disposed inside the envelope (124, 924) and fixed thereto at said mouth (128) and said discharge orifice (130, 930).

2. Picking-up device (100, 700, 900) according to claim 1, **characterised in that** the or each inflatable tube (140) is disposed so that, when it is deployed, it is out of the water (10).

3. Picking-up device (100, 700, 900) according to claim 1 or 2, **characterised in that** the framework (101, 901) comprises a main ring (102), upstream rings (104) disposed upstream of the main ring (102), downstream rings (106, 916) disposed downstream of the main ring (102) and extension links (108, 110) connecting each ring (102, 104, 106, 916) to the adjoining ring or rings.

4. Picking-up device (100, 700, 900) according to claim 3, **characterised in that** the dimensions of the upstream rings (104) decrease going towards the front of the picking-up device (100, 700, 900).

5. Picking-up device (100, 700, 900) according to one of the claims 3 or 4, **characterised in that** the downstream ring (106, 916) furthest downstream supports a holding bar (134) to which a part (132) of the envelope (124, 924) forming the upper limit of the discharge orifice (130, 930) is fixed.

6. Picking-up device (100, 700, 900) according to claim 5, **characterised in that** said part (132) is extended towards the front of the envelope (124, 924) and **in that** this extension (306, 906) is fixed to the rings (102, 106, 916) that it passes through by fixing bars (308) so as to form a tunnel.

7. Picking-up device (700) according to claim 6, **characterised in that** it comprises a helix (706) disposed in said tunnel and the rotation axis of which is parallel to the direction of progress of the picking-up device (700), and driving means (704, 708) intended to drive said helix (706) in rotation.

8. Picking-up device (700) according to claim 7, **characterised in that** the driving means (704) comprise a shaft (804), at least one bladed wheel (710) mounted on said shaft (804) and a set of driving bars and pinions (708) that convert the rotation of the bladed wheel or wheels (710) into a rotation of the helix (706).

9. Picking-up device (100, 700, 900) according to one of the claims 1 to 8, **characterised in that** it comprises a first obturation device (112) designed to adopt alternately an obturation position in which nothing can enter through the mouth (128) and an open position in which the water (10) and the floating objects can enter the mouth (128) and comprising activation means (508) that can be controlled from the surface.

10. Picking-up device (100, 700, 900) according to claim 9, **characterised in that** the first obturation device (112) comprises a deflection flap (502) mounted at the top part of the mouth (128) by means of a hinge with a horizontal axis perpendicular to the direction of progress of the picking-up device (100).

11. Picking-up device (100, 700, 900) according to claim 10, **characterised in that** the deflection flap (502) floats.

12. Picking-up device (100, 700, 900) according to on of the claims 10 or 11, **characterised in that** the first obturation device (112) comprises a plunge flap (504) mounted at the bottom part of the mouth (128) by means of a hinge with a horizontal axis perpendicular to the direction of progress of the picking-up device (100, 700, 900).

13. Picking-up device (100, 700, 900) according to claim 12, **characterised in that** the plunge flap (504) sinks.

14. Picking-up device (700) according to on of the claims 9 to 13, **characterised in that** it comprises, just downstream of the mouth (128), a floating flap (702) mounted so as to rotate freely about a horizontal axis perpendicular to the direction of progress of the picking-up device (700).

15. Picking-up device (100, 700, 900) according to one of the claims 1 to 14, **characterised in that** it comprises a second obturation device (136) designed to adopt alternately an obturation position in which nothing can leave through the discharge orifice (130, 930) and an open position in which water (10) can leave through the discharge orifice (130, 930), and comprising activation means (608) that can be controlled from the surface.

16. Picking-up device (100, 700, 900) according to one of the claims 1 to 15, **characterised in that** it comprises a skirt (312, 912) extending towards the rear in line with the envelope (124, 924) and the free edge of which is sufficiently rigid to stay open.

17. Picking-up device (100, 700, 900) according to one of the claims 1 to 16, **characterised in that** the cross section of the mouth (128) is less than or equal to the cross section of the discharge orifice (130).

18. Picking-up device (100, 700, 900) according to one of the claims 1 to 17, **characterised in that** it comprises floats (120) fixed at the top part of the envelope (124, 924) .

19. Picking-up device (100, 700, 900) according to one of the claims 1 to 18, **characterised in that** it comprises a ballast (170) fixed to the base of the picking-up device (100, 700, 900).

20. Picking-up device (100, 700, 900) according to one of the claims 1 to 19, **characterised in that** the envelope (124, 924) has an access for accessing the inside of the envelope (124, 924) and **in that** the picking-up device (100, 700, 900) comprises a lining covering the internal volume of the envelope (124, 924) and removably fixed to the framework (101, 901) and optionally to the envelope (124, 924).

21. Picking-up device (100, 700, 900) according to one of the claims 1 to 20, **characterised in that** it comprises a vent (114) comprising a body (402) and a float (404), the body (402) being fixed by its base (412) and having a top stop (408) and a bottom stop (410) positioned between said base (412) and said top stop (408), and the float (404) being disposed inside the body (402) between the bottom stop (410) and the top stop (408).

22. Picking-up device (900) according to one of the claims 1 to 21, **characterised in that** the diameter of the discharge orifice (930) broadens going towards the downstream end of the picking-up device (900).

## Patentansprüche

1. Sammelvorrichtung (100, 700, 900) für auf dem Wasser (10) schwimmende Objekte (304), wie Kohlenwasserstoffe, die enthält:
- eine Hülle (124, 924) aus einem geschmeidigen und für Wasser und die schwimmenden Objekte undurchlässigen Material (304), die stromaufwärts einen Einlauf (128) und stromabwärts eine Abfuhröffnung (130, 930) aufweist,
- mindestens einen aufblasbaren Wulst (140), der an der Hülle (124, 924) befestigt ist und sich über die Länge der Hülle (124, 924) erstreckt, und
- eine Vorrichtung zur Erzeugung von Druckgas, die vorgesehen ist, um den oder jeden aufblasbaren Wulst (140) aufzublasen,
**dadurch gekennzeichnet, dass** die Vorrichtung ein faltbares und starres Gerüst (101, 901) enthält, das im Inneren der Hülle (124, 924) angeordnet und an dieser in Höhe des Einlaufs (128) und der Abfuhröffnung (130, 930) befestigt ist.

2. Sammelvorrichtung (100, 700, 900) nach Anspruch 1, **dadurch gekennzeichnet, dass** der oder jeder aufblasbare Wulst (140) so angeordnet ist, dass er sich, wenn er entfaltet ist, außerhalb des Wassers (10) befindet.

3. Sammelvorrichtung (100, 700, 900) nach einem der Ansprüche 1 oder 2, **dadurch gekennzeichnet, dass** das Gerüst (101, 901) einen Hauptring (102), vordere Ringe (104), die stromaufwärts vor dem Hauptring (102) angeordnet sind, hintere Ringe (106, 916), die stromabwärts hinter dem Hauptring (102) angeordnet sind, und Verlängerungsstangen (108, 110) enthält, die jeden Ring (102, 104, 106, 916) mit dem/den benachbarten Ring(en) verbinden.

4. Sammelvorrichtung (100, 700, 900) nach Anspruch 3, **dadurch gekennzeichnet, dass** die Abmessungen der vorderen Ringe (104) in Richtung zur Vorderseite der Sammelvorrichtung (100, 700, 900) abnehmen.

5. Sammelvorrichtung (100, 700, 900) nach einem der Ansprüche 3 oder 4, **dadurch gekennzeichnet, dass** der am weitesten stromabwärts liegende hintere Ring (106, 916) einen Haltestab (134) trägt, an dem ein Teil (132) der Hülle (124, 924) befestigt ist, der die Obergrenze der Abfuhröffnung (130, 930) formt.

6. Sammelvorrichtung (100, 700, 900) nach Anspruch 5, **dadurch gekennzeichnet, dass** der Teil (132) sich zur Vorderseite der Hülle (124, 924) verlängert und dass diese Verlängerung (306, 906) an den Ringen (102, 106, 916), die sie durchquert, durch Befestigungsstäbe (308) so befestigt ist, dass sie einen Tunnel bildet.

7. Sammelvorrichtung (700) nach Anspruch 6, **dadurch gekennzeichnet, dass** sie einen Propeller (706), der in dem Tunnel angeordnet ist und dessen Drehachse parallel zur Vorschubrichtung der Sammelvorrichtung (700) ist, und Antriebseinrichtungen (704, 708) enthält, die dazu bestimmt sind, den Propeller (706) in Drehung zu versetzen.

8. Sammelvorrichtung (700) nach Anspruch 7, **dadurch gekennzeichnet, dass** die Antriebseinrichtungen (704) eine Welle (804), mindestens ein auf die Welle (804) montiertes Schaufelrad (710) und eine Einheit von Antriebsstäben und Ritzeln (708) aufweisen, die die Drehung des oder der Schaufelräder (710) in eine Drehung des Propellers (706) umwandeln.

9. Sammelvorrichtung (100, 700, 900) nach einem der Ansprüche 1 bis 8, **dadurch gekennzeichnet, dass** sie eine erste Absperrvorrichtung (112) enthält, die vorgesehen ist, um abwechselnd eine Absperrstellung, in der nichts durch den Einlauf (128) eindringen kann, und eine Öffnungsstellung einzunehmen, in der das Wasser (10) und die schwimmenden Objekte in den Einlauf (128) eindringen können, und die Aktivierungseinrichtungen (508) enthält, die von der Oberfläche gesteuert werden können.

10. Sammelvorrichtung (100, 700, 900) nach Anspruch 9, **dadurch gekennzeichnet, dass** die erste Absperrvorrichtung (112) eine Ablenkklappe (502) enthält, die im oberen Teil des Einlaufs (128) mittels eines Scharniers mit waagrechter und zur Vorschubrichtung der Sammelvorrichtung (100) lotrechter Achse montiert ist.

11. Sammelvorrichtung (100, 700, 900) nach Anspruch 10, **dadurch gekennzeichnet, dass** die Ablenkklappe (502) schwimmt.

12. Sammelvorrichtung (100, 700, 900) nach einem der Ansprüche 10 oder 11, **dadurch gekennzeichnet, dass** die erste Absperrvorrichtung (112) eine Tauchklappe (504) enthält, die im unteren Teil des Einlaufs (128) mittels eines Scharniers mit waagrechter und zur Vorschubrichtung der Sammelvorrichtung (100, 700, 900) lotrechter Achse montiert ist.

13. Sammelvorrichtung (100, 700, 900) nach Anspruch 12, **dadurch gekennzeichnet, dass** die Tauchklappe (504) untergeht.

14. Sammelvorrichtung (700) nach einem der Ansprüche 9 bis 13, **dadurch gekennzeichnet, dass** sie direkt hinter dem Einlauf (128) eine schwimmende Klappe (702) aufweist, die um eine waagrechte und zur Vorschubrichtung der Sammelvorrichtung (700) lotrechte Achse frei drehend montiert ist.

15. Sammelvorrichtung (100, 700, 900) nach einem der Ansprüche 1 bis 14, **dadurch gekennzeichnet, dass** sie eine zweite Absperrvorrichtung (136) enthält, die vorgesehen ist, um abwechselnd eine Absperrstellung, in der nichts durch die Abfuhröffnung (130, 930) austreten kann, und eine Offnungsstellung einzunehmen, in der das Wasser (10) durch die Abfuhröffnung (130, 930) austreten kann, und die Aktivierungseinrichtungen (608) enthält, die von der Oberfläche gesteuert werden können.

16. Sammelvorrichtung (100, 700, 900) nach einem der Ansprüche 1 bis 15, **dadurch gekennzeichnet, dass** sie eine Schürze (312, 912) enthält, die sich in der Verlängerung der Hülle (124, 924) nach hinten erstreckt und deren freier Rand steif genug ist, um sich offen zu halten.

17. Sammelvorrichtung (100, 700, 900) nach einem der Ansprüche 1 bis 16, **dadurch gekennzeichnet, dass** der Querschnitt des Einlaufs (128) kleiner als der oder gleich dem Querschnitt der Abfuhröffnung (130) ist.

18. Sammelvorrichtung (100, 700, 900) nach einem der Ansprüche 1 bis 17, **dadurch gekennzeichnet, dass** sie Schwimmer (120) enthält, die im oberen Teil der Hülle (124, 924) befestigt sind.

19. Sammelvorrichtung (100, 700, 900) nach einem der Ansprüche 1 bis 18, **dadurch gekennzeichnet, dass** sie einen Ballast (170) enthält, der an der Basis der Sammelvorrichtung (100, 700, 900) befestigt ist.

20. Sammelvorrichtung (100, 700, 900) nach einem der Ansprüche 1 bis 19, **dadurch gekennzeichnet, dass** die Hülle (124, 924) einen Zugang aufweist, der es ermöglicht, ins Innere der Hülle (124, 924) zu gelangen, und dass die Sammelvorrichtung (100, 700, 900) ein Futter enthält, das das Innenvolumen der Hülle (124, 924) auskleidet und lösbar am Gerüst (101, 901) und ggf. an der Hülle (124, 924) befestigt ist.

21. Sammelvorrichtung (100, 700, 900) nach einem der Ansprüche 1 bis 20, **dadurch gekennzeichnet, dass** sie eine Entlüftungsklappe (114) enthält, die einen Körper (402) und einen Schwimmer (404) enthält, wobei der Körper (402) durch seine Basis (412) befestigt ist und einen oberen Anschlag (408) und einen unteren Anschlag (410) enthält, der zwischen der Basis (412) und dem oberen Anschlag (408) angeordnet ist, und der Schwimmer (404) im Inneren des Körpers (402) zwischen dem unteren Anschlag (410) und dem oberen Anschlag (408) angeordnet ist.

22. Sammelvorrichtung (900) nach einem der Ansprüche 1 bis 21, **dadurch gekennzeichnet, dass** der Durchmesser der Abfuhröffnung (930) sich in Stromabwärtsrichtung der Sammelvorrichtung (900) erweitert.
